# EUROPÄISCHE PATENTSCHRIFT

(11) **EP 1 356 884 B1**
(45) Veröffentlichungstag und Bekanntmachung des Hinweises auf die Patenterteilung: **20.09.2006**
(21) Anmeldenummer: 03008543.5
(22) Anmeldetag: 14.04.2003
(51) Int. Cl.: B23B 51/10

(54) **Werkzeug zum Senken und/ oder Entgraten von Bohrungen**
Tool for chanfering and/ or deburring of holes
Outil à chanfreiner et/ ou ébavurer des trous

(30) Priorität: 26.04.2002 DE 10218875
(43) Veröffentlichungstag der Anmeldung: 29.10.2003
(73) Patentinhaber: Heule, Ulf, 9436 Balgach (CH)
(72) Erfinder: Heule, Heinrich, 9434 AU (CH); Schmitter, Roland, 9450 Altstätten (CH); Hämmerle, Swen, 9443 Widnau (CH)
(74) Vertreter: Riebling, Peter

(56) Entgegenhaltungen:
- DE-B- 1 030 655
- US-A- 4 844 670
- US-A- 6 033 160

## Beschreibung

Die Erfindung betrifft ein Werkzeug zum Senken, Entgraten und/oder Ausspindeln von Bohrungen nach dem Oberbegriff des Patentanspruchs 1.

Es sind Werkzeuge zum Senken, Entgraten und Ausspindeln für Bohrungen bekannt, bei denen ein um seine Längsachse rotierend angetriebener Messerhalter verwendet wird. In diesem Messerhalter ist im Winkel zu seiner Längsachse mindestens eine den Körper des Messerhalters mindestens teilweise durchgreifende Ausnehmung vorhanden, in der ein Schneid-, Senk- oder Entgratmesser angeordnet ist.

Die Erfindung betrifft jedoch nicht nur die Führung von Schneidmessern in einem Messerhalter für das Senken, Entgraten und/oder Ausspindeln von Bohrungen, sondern auch einen Halter für ein Schneidmesser, der auswechselbar im Werkzeug angeordnet ist.

Derartige Messerhalter mit in einer Ausnehmung geführten Schneidmessern sind bekannt. Es ist jedoch lediglich bekannt, die Ausnehmung annähernd eckig mit scharfen Kanten auszuführen und das Schneidmesser dieser eckigen Form anzupassen, um eine Gleit- oder Verschiebeführung des Schneidmessers in dieser Ausnehmung zu erreichen.

Bei der eckigen Ausführung des Schneidmessers mit einer daran angepassten Ausnehmung besteht jedoch der Nachteil einer schwierigen Herstellung. Die Ausnehmung kann bisher nur durch Erodierung hergestellt werden, was mit einem hohen Bearbeitungsaufwand verbunden ist. Ebenso ist die Herstellung der an die Ausnehmung angepassten Schneidmesser relativ aufwendig.

Die Ausbildung einer eckig geformten Ausnehmung mit einem zugeordneten, der Formgebung angepassten Schneidmesser hat den weiteren Nachteil, dass während der spanabhebenden Bearbeitung von Werkstücken die Gefahr besteht, dass sich das Schneidmesser im Bereich der Ausnehmung verkantet. Dies führt zu einem vorzeitigen Verschleiß der Führungskanten in der Ausnehmung und im übrigen zu einem Festsitzen des Schneidmessers in dieser Längsführung des Messerhalters.

Beim Ausfahren der Werkzeugmaschinenspindel mit in der Längsführung der Ausnehmung des Messerhalters verkeiltem Schneidmesser stößt dieses an Bohrungskanten des Werkstückes an und zerbricht. Darüber hinaus kann auch der Messerhalter durch das Ausbrechen des Schneidmessers beschädigt werden.

Wenn in einer das Schneidmesser führenden Ausnehmung scharfe Kanten geschaffen werden, so führt dies zu Schwächungsbruchstellen, welche die Festigkeit des Messerhalters insgesamt beeinträchtigen.

Mit der Druckschrift US 6,033,160 A wird ein Werkzeug zum Senken, Entgraten und/oder Ausspindeln von Bohrungen mit einem Messerhalter offenbart, in dem im Winkel zu seiner Längsachse mindestens eine Ausnehmung angeordnet ist, in der ein oder mehrere Schneidmesser oder deren Halter auswechselbar und/oder verschiebbar lastübertragend gehalten sind, wobei die Ausnehmung rechteckig ist.

Der Erfindung liegt die Aufgabe zugrunde, ein Werkzeug der eingangs genannten Art mit mindestens einer Ausnehmung und einem darin geführten Schneidmesser oder einem Halter für ein Schneidmesser so weiter zu bilden, dass bei gleichbleibenden Dimensionen des Messerhalters wesentliche höhere Schnittkräfte aufgenommen werden können und eine verbesserte, lastübertragende Führung des Schneidmessers bzw. seines Halters im Messerhalter gegeben ist.

Zur Lösung der gestellten Aufgabe ist die Erfindung durch die technische Lehre des Anspruches 1 gekennzeichnet. Wesentliches Merkmal der Erfindung ist, dass statt nun einer eckigen Ausnehmung in einem Messerhalter eine Ausnehmung vorgesehen ist, die im wesentlichen aus ineinander übergehenden Radien und/oder Geraden und/oder Strecken besteht, wobei die Ausnehmung und der darin befindliche Grundkörper des mindestens einen Schneidmessers oder dessen Halter eine etwa "8"- oder brillenförmige oder knochen förmige oder nierenförmige oder doppel-blattförmige oder doppel-trochoidförmige oder doppel-pentagonalförmige Formgebung aufweisen. Bevorzugt wird es hierbei, wenn zwei etwa symmetrisch zueinander angeordnete und gegeneinander gestellte Radien ineinander übergehen und der Übergangsbereich ebenfalls durch kleinere Radien gebildet wird.

Es wird also erfindungsgemäß eine etwa 8-förmige (oder brillenförmige) Ausnehmung vorgeschlagen, in welcher das Messer bzw. deren Halter verschiebbar geführt ist.

Aus Gründen der Vereinfachung wird in der folgenden Beschreibung nur noch von einem (und nicht von mehreren) Messer(n) gesprochen und auch nicht mehr von einem Halter für ein oder mehrere Schneidmesser. Die Erfindung bezieht sich aber sowohl auf ein (oder mehrere) Schneidmesser als auch auf einen (oder mehrere) Halter für ein Schneidmesser, weil beide Teile erfindungsgemäß in einer solchen Ausnehmung (oder auch in mehreren Ausnehmungen des Messerhalters) verschiebbar geführt sind.

Auch der Begriff "verschiebbar geführt" wir im Rahmen der vorliegenden Erfindung weit verstanden. Hierunter wird einerseits verstanden, dass bei einem Entgratwerkzeug das Schneidmesser entsprechend verschiebbar angetrieben in der Ausnehmung im Messerhalter gehalten ist. Das Schneidmesser wird hierbei mit dem geringen Spiel einer Gleitführung in der Ausnehmung geführt.

Die Erfindung betrifft andererseits auch Werkzeuge mit einem in der Ausnehmung fest angeordneten Schneidmesser, welches im Betriebszustand nicht längs verschiebbar geführt ist. Ein solches Schneidmesser (bzw. der dazugehörende Halter) ist dann lediglich in der Ausnehmung befestigt; es kann dort auch einstellbar befestigt sein (z. B. über einen Spindelantrieb oder über eine Einstellschraube).Während des Betriebes ist aber ein derartiges Schneidmesser jedoch feststehend in der Ausnehmung gelagert.

Die Erfindung sieht in einer ersten Ausführungsform vor, dass die Formgebung (Außenkontur) des Schneidmessers der Kontur der Ausnehmung im Werkzeughalter angepasst ist. Es besteht lediglich ein geringes Verstellspiel zwischen dem Außenumfang des Schneidmessers und dem Innenumfang der Ausnehmung.

In einer zweiten Ausführung ist hingegen vorgesehen, dass die Kontur der Ausnehmung im Werkzeughalter nicht dem Profil des Schneidmessers entspricht. In dieser Ausführung legt sich der Außenumfang des Schneidmessers lastübertragend nur an bestimmten Zonen an den Innenumfang der Ausnehmung im Werkzeughalter an. Vorteil dieser Ausführung ist, dass sich in den nicht-lastübertragenden Bereichen große Freiräume entstehen, in denen die bei der Werkstück-Bearbeitung entstehenden Späne gut aufgenommen und abgeführt werden können.

In beiden Ausführungsformen wird eine wesentlich bessere Lastübertragung der Schneid- und Verkantungskräfte des Messers in einer aus mehreren ineinander übergehenden Radien ausgebildeten Ausnehmung im Messerhalter erreicht.

Es hat sich gezeigt, dass eine im Messerhalter angeordnete, gleich dimensionierte Ausnehmung, die aus ineinander anschließenden Rechtecken besteht, wesentlich ungünstiger hinsichtlich der Bruchfestigkeit ist.

Die scharfen Kanten nach dem Stand der Technik sind unerwünschte Sollbruchstellen und es ergibt sich bei gleicher Anforderung an die Bruchfestigkeit die Notwendigkeit, die Ausnehmung größer zu gestalten, als vergleichsweise die erfindungsgemäße Ausnehmung mit ineinander übergehenden Radien. Dadurch wird - bei einem Messerhalter nach dem Stand der Technik - der Messerhalter durch die notwendig größere Ausnehmung geschwächt und kann nur noch geringere Kipp- und Verdrehungskräfte übertragen.

Selbstverständlich ist die Erfindung nicht auf eine einfache "8" als Ausnehmung für ein Messer beschränkt, sondern es kann auch eine aus mehreren (als für eine "8" notwendigen) Radien gebildete Ausnehmung vorgesehen werden. Es handelt sich z. B. um eine Doppel-8 oder um anderen Ausbildungen, bei denen nur wesentlich ist, dass stetige, gekrümmte Kurvenabschnitte ineinander übergehen, ohne störende Kanten zwischen sich auszubilden.

Selbstverständlich sieht die Erfindung auch vor, wenn Radien ineinander übergehen, (insbesondere bei den großen Radien mit den daran anschließenden entgegen gesetzten, kleineren Radien), dass die dort verbindenden Radienabschnitte durch Geraden miteinander verbunden sind.

Im Übrigen ist die Erfindung nicht darauf beschränkt, dass die Längsachse der Ausnehmung für die Aufnahme des Messers senkrecht zur Längsachse des Messerhalters steht. Die Längsachse der Ausnehmung kann auch schräg zur Längsachse des Messerhaltes ausgebildet sein. Ebenso können am Messerhalter mehrere übereinander oder nebeneinander liegende Ausnehmungen vorgesehen sein, und es kann auch vorgesehen sein, dass bei mehreren Ausnehmungen, die auf dem gleichen Bearbeitungsradius liegen, diese ineinander übergehen.

Ebenso kann das Messer an der unteren Stirnseite des Messerhalters angeordnet sein, so dass die Längsachse durch die Ausnehmung fluchtend zur Längsachse des Messerhalters ausgebildet ist.

Ebenso ist die Erfindung nicht darauf beschränkt, dass lediglich ein einziges Schneidmesser oder dessen Halter vorgesehen ist. Am Messerhalter kann ein vorderes oder ein hinteres Schneidmesser in der gleichen Ausnehmung angeordnet sein, oder es können in verschiedenen Ausnehmungen auch verschiedene Schneidmesser vorgesehen werden.

In einer bevorzugten Ausgestaltung der vorliegenden Erfindung ist die Längserstreckung der etwa brillenförmig ausgebildeten Ausnehmung parallel zur Längsachse des Messerhalters angeordnet.

In einer anderen Ausgestaltung der Erfindung ist es vorgesehen, dass die Längserstreckung der brillenförmigen Ausnehmung senkrecht (oder in einem von 90 Grad abweichenden Winkel) zur Längsachse des Messerhalters ausgebildet ist.

Im Folgenden wird die Erfindung anhand von lediglich einen Ausführungsweg darstellenden Zeichnungen näher erläutert. Hierbei gehen aus den Zeichnungen und ihrer Beschreibung weitere Merkmale und Vorteile der Erfindung hervor.

Es zeigen:
- Figur 1:: Perspektivische Seitenansicht eines Messerhalters in zerlegtem Zustand;
- Figur 2:: Der Messerhalter nach Figur 1 in zusammengebautem Zustand;
- Figur 3:: Der Messerhalter nach Figur 1 und 2 ohne Antriebsstab und ohne Messer;
- Figur 4:: Ein Ausführungsbeispiel eines Scheidmessers für den Messerhalter nach den Figuren 1 bis 3;
- Figur 5:: Der Messerhalter nach den Figuren 1 bis 4 in zusammengebautem Zustand;
- Figur 6:: Schnitt gemäß der Linie A-A in Figur 5;
- Figur 7:: Die vergrößerte Darstellung der Ausnehmung für das Schneidmesser;
- Figur 8:: Eine Variante der Ausnehmung für das Schneidmesser nach Figur 7 ohne verrundende Übergänge zwischen den großen Radien;
- Figur 9:: Eine Variante der Ausnehmung für das Schneidmesser nach Figur 8 mit unterschiedlichen Ausmaßen der großen Radien;
- Figur 10:: Eine weitere Variante der Ausnehmung für das Schneidmesser nach Figur 8 mit Geraden zwischen den großen Radien;
- Figur 11:: Eine Variante der Ausnehmung für das Schneidmesser nach Figur 9 mit Geraden zwischen den großen Radien oder nach Figur 10 mit unterschiedlichen Ausmaßen der großen Radien;
- Figur 12:: Eine Variante der Ausnehmung für das Schneidmesser nach Figur 10 mit seitlichem Versatz der Mittelpunkte der großen Radien;
- Figur 13:: Eine weitere Variante der Ausnehmung für das Schneidmesser nach Figur 11 mit seitlichem Versatz der Mittelpunkte der großen Radien oder nach Figur 12 mit unterschiedlichen Ausmaßen der großen Radien;
- Figur 14:: Eine weitere Variante der Ausnehmung für das Schneidmesser nach Figur 8 mit seitlichem Versatz der Mittelpunkte der großen Radien;
- Figur 15:: Eine weitere Variante der Ausnehmung für das Schneidmesser nach Figur 9 mit seitlichem Versatz der Mittelpunkte der großen Radien oder nach Figur 14 mit unterschiedlichen Ausmaßen der großen Radien;
- Figur 16:: Eine weitere Variante der Ausnehmung für das Schneidmesser nach Figur 8 mit durch mehrere Flächen beschnittenen großen Radien;
- Figur 17:: Eine weitere Variante der Ausnehmung für das Schneidmesser nach Figur 8 mit durch mehrere Flächen und kleinen Radien beschnittenen großen Radien;
- Figur 18:: Vergrößerte Detail-Darstellung der Ausnehmung für das Schneidmesser nach Figur 8 im Bereich des scharfkantigen Übergangs der großen Radien.
- Figur 19:: Schematisiert der Eingriff eines Schneidmessers in eine nicht an die Formgebung des Schneidmessers angepasste Ausnehmung im Messerhalter

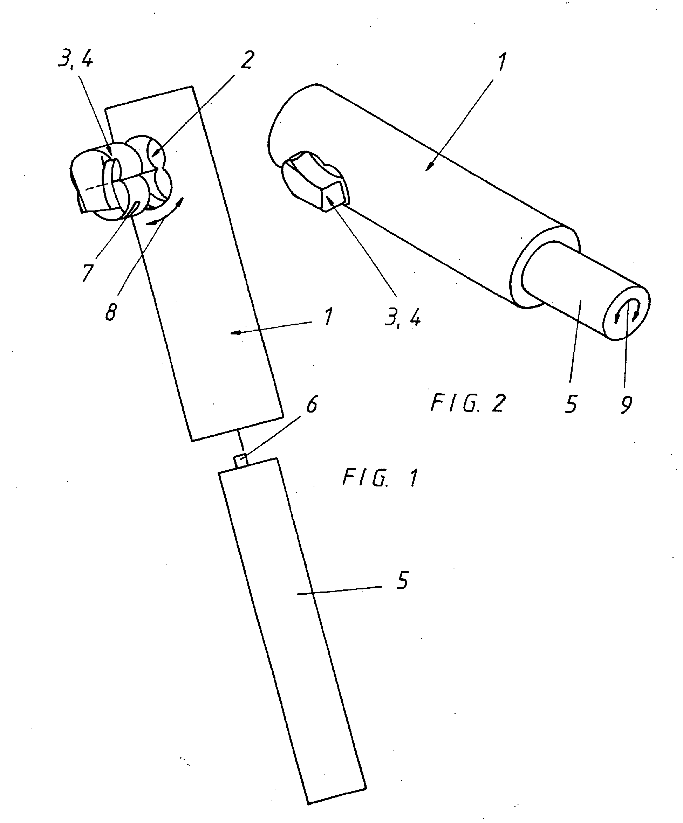

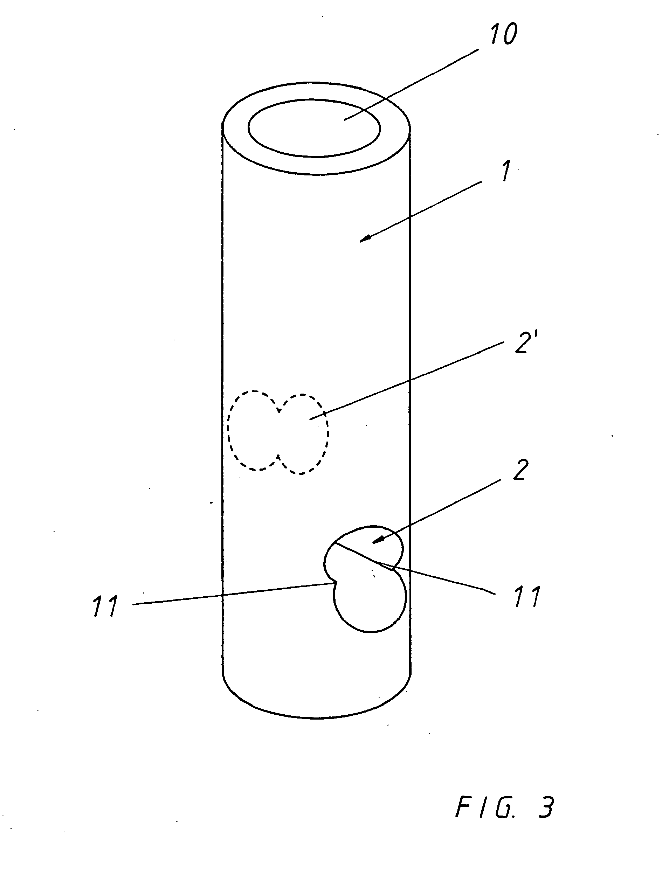

In Figur 1 ist ein etwa zylinderförmiger Messerhalter 1 dargestellt, der aus einem rotationssymmetrischen Teil besteht, welches in der Pfeilrichtung 9 um seine Längsachse drehend angetrieben ist. Der Drehantrieb durch eine Werkzeugspindel ist hierbei nicht dargestellt. Der Messerhalter 1 hat gemäß Figur 3 eine zentrale Längsbohrung 10, in welcher ein Antriebsstab 5 drehbar aufgenommen ist.

Exzentrisch an der Stirnseite des Antriebsstabes 5 ist eine Nocke 6 angeordnet, die in eine zugeordnete Nut 7 des Schneidmesser 3 eingreift, so dass dieses bei Verdrehung des Antriebsstabes 5 in den Pfeilrichtungen 8 in der Ausnehmung 2 im Messerhalter 1 verschiebbar geführt ist. Die Ausnehmung 2 durchsetzt hierbei den Messerhalter 1 auf seiner gesamten Breite. Dies ist für die Verwirklichung der Erfindung jedoch nicht entscheidend: Es kann auch vorgesehen sein, die Ausnehmung 2 lediglich als "Sackausnehmung" auszuführen.

Das gezeichnete Werkzeug dient im Ausführungsbeispiel als Senkwerkzeug, mit dem - bei in die Ausnehmung 2 eingefahrenen Schneidmesser 3 - durch eine Bohrung hindurchgefahren wird und danach das Schneidmesser 3 aus dem Messerhalter 1 herausgefahren wird, um eine Senkung im Bereich einer daran anschließenden, weiteren Bohrung anzubringen.

Dieser Anwendungsbereich ist jedoch nicht auf Senkwerkzeuge beschränkt, wie in der allgemeinen Beschreibung ausgeführt wurde. Es handelt sich also lediglich um ein bevorzugtes Ausführungsbeispiel, welches nicht beschränkend für die Erfindung zu verstehen ist.

Aus den genannten Gründen wurde deshalb für das Schneidmesser neben dem Bezugszeichen 3 ein zusätzliches Bezugszeichen 4 für einen (nicht dargestellten) Halter für ein solches Schneidmesser verwendet.

Die Figur 3 zeigt im übrigen auch, dass die etwa brillenförmige Ausnehmung 2 mit ihrer Längserstreckung nicht parallel zur Längsachse des Messerhalters 1 liegen muss, sondern in gestrichelten Linien ist in Figur 3 dargestellt, dass eine Ausnehmung 2' mit ihrer Längserstreckung auch senkrecht zur Längsachse des Messerhalters 1 angeordnet sein kann.

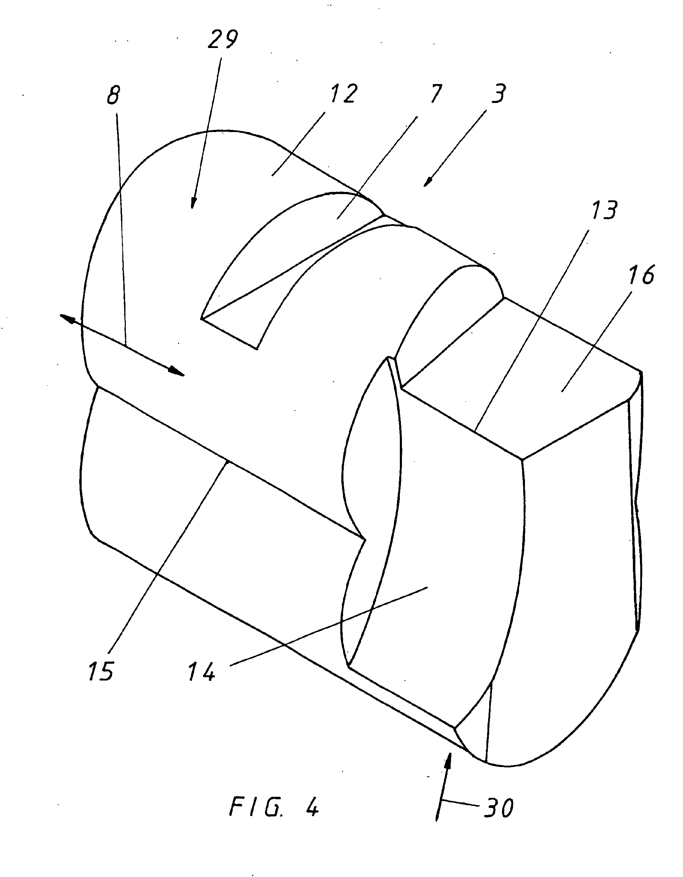

Das Schneidmesser 3 wird nach Figur 4 näher beschrieben. Es besteht aus einem Körper 12, in dem im Umfangsrichtung die Nut 7 für den Eingriff der Nocke 6 des Antriebsstabes 5 eingearbeitet ist.

An der Vorderkante ist vom Körper 12 abgesetzt eine Schneidkante 13 vorgesehen, welche die spanabhebende Bearbeitung der Bohrung vollzieht. Die Schneidkante 13 geht in eine Freifläche 16 über.

Unterhalb der Schneidkante 13 ist in an sich bekannter Weise eine Spannut 14 angeordnet, welche zur nach unten gerichteten Abführung der von der Schneidkante 13 abgehobenen Späne dient.

Das Schneidmesser 3 ist somit in den Pfeilrichtungen 8 in der Ausnehmung 2, 2' verschiebbar geführt und die auf das Schneidmesser 3 wirkenden Verkantungskräfte werden im wesentlichen von zwei diametral gegenüber liegenden Positionen 29, 30 des Schneidmessers auf die zugeordneten Führungs- und Abstützflächen in der Ausnehmung 2 übertragen.

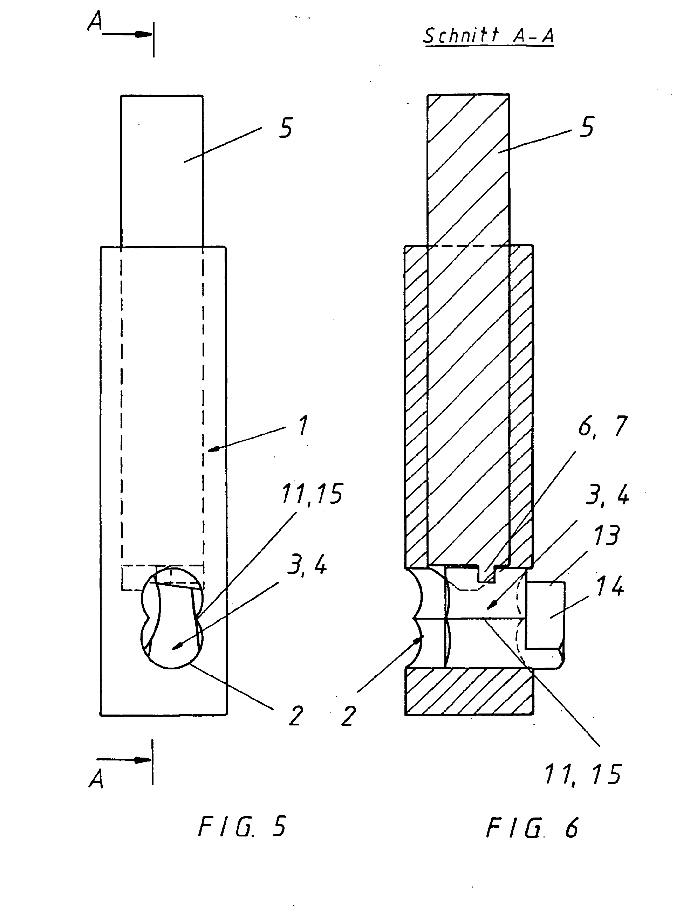

Die Figuren 5 und 6 zeigen den Einbauzustand, aus dem erkennbar ist, dass das Schneidmesser 3 bzw. der Halter 4 für dieses Schneidmesser in der Ausnehmung 2 verschiebbar geführt ist.

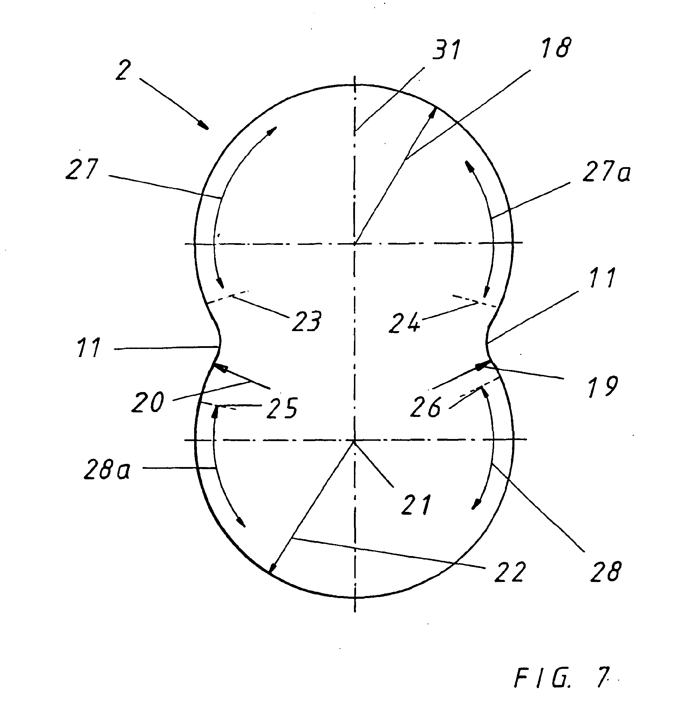

In Figur 7 sind die weiteren Einzelheiten der etwa brillenförmigen oder achtförmigen Ausnehmung 2 dargestellt. Wichtig ist, dass der obere Teil der Ausnehmung 2 durch einen Radius 18 gebildet wird, der von einem Mittelpunkt 17 ausgeht. Der untere Teil der Ausnehmung wird durch einen Radius 22 gebildet, der von einem Mittelpunkt 21 ausgeht.

Die beiden Radien 18, 22 können gleich gewählt werden, sie können aber auch unterschiedlich sein.

Es ist nicht lösungsnotwendig, dass die Mittelpunkte 17, 21 der Radien 18, 22 zueinander fluchtend auf der Längserstreckung 31 der Ausnehmung 2 liegen. Diese beiden Mittelpunkte 17, 21 können auch zueinander versetzt zur Längserstreckung 31 angeordnet werden.

Wichtig ist, dass die beiden Radien, 18, 22 so gewählt sind, das sie sich in einem Mittenbereich schneiden, d. h. ineinander übergehen. Dieser Mitten- oder Übergangsbereich ist durch weitere, entgegen gesetzt gerichtete, kleinere Radien 19 und 20 gebildet.

Es ist nicht lösungsnotwendig, dass die größeren Radien 18 und 22 stetig mit Krümmungen in die kleineren Radien 19,20 übergehen. In den dazwischen liegenden Übergangsbereichen können auch diese Radien (stetig oder unstetig) verbindende, kurze Geraden (oder andere leicht gekrümmte Kurvenstücke) vorgesehen sein.

Mit der technischen Lehre nach der Erfindung erfolgt nun eine Verbesserung der Lastübertragung vom Schneidmesser 3 auf die Ausnehmung 2.

Es hat sich herausgestellt, dass beispielsweise im oberen Teil der Ausnehmung 2 - im Bereich des Radius 18 - die Lastübertragung etwa erst bei Position 23 beginnt und sich bis etwa zur Position 24 erstreckt.

Der größte Anteil der Verkantungs- und Verdrehkräfte wird jedoch in dem gezeichneten Bogen der Lastübertragung 27 übertragen. Es kommt dort zur einer lastübertragenen Anlage des Schneidmessers im Bereich des Radius 18, wobei die Gegenlastübertragung 27 a nur zur Führung und zur Lagensicherung dient.

Gleiches gilt für den unteren Radius 22, wo die Lastübertragung etwa bei Position 25 beginnt und bei Position 26 aufhört. Auch dort erfolgt der wesentliche Teil der Lastübertragung 28 im Bereich des gezeichneten Bogens, während bei der gegenüberliegenden 28 a nur die Führung und Lagensicherung stattfindet. Es gibt dem gemäß im Bereich der Ausnehmung 2 zwei großflächige, diametral einander gegenüberliegende bogenförmige Lastübertragungsbereiche 27 und 28 die eine hochbelastbare Führung des Messer in der Ausnehmung 2 bewirken.

Die beschriebenen Lastübertragungsverhältnisse beziehen sich auf die Ausführung nach Figur 6, bei der die Schneidkante 13 des Messer für die Rückwärtsbearbeitung der Bohrung ausgerichtet ist.

Ebenso kann die Schneidkante 13 in der Nähe der Stirnseite des Messerhalters 1 - für eine vorwärts gehende Bearbeitung - angeordnet sein; es gelten dann in analoger Weise die umgekehrten Lastübertragungsverhältnisse.

Im Ausführungsbeispiel ist die Längserstreckung 31 der Ausnehmung 2 parallel zur Längsachse des Messerhalters ausgerichtet.

Die Figur 3 zeigt, dass die Längserstreckung 31 auch senkrecht zur Längsachse des Messerhalters 1 angeordnet sein kann.

Vorteile bei der etwa brillenförmigen Ausbildung der Ausnehmung 2 nach Figur 7 ergeben sich im Bereich der Radien 19, 20. Das Schneidmesser 3 greift an den Sicherungskanten 11, 11 a mit zugeordneten Sicherungskanten 15 an, wobei in diesem Bereich jedoch im wesentlichen keine Lastübertragung stattfindet.

Durch die Einschnürung der Sicherungskanten 11, 11a im Material des Messerhalters 1 bleibt in diesem Bereich mehr Material stehen und kann daher für eine bessere Lastübertragung (mit höherer Bruchlast) genutzt werden. Der Messerhalter ist damit besser gegen Bruch geschützt.

Wenn man die beiden gegenüberliegenden Radien 19, 20 unterschiedlich groß ausbildet, dann fungieren diese als Schlüsselöffnungen für das Schneidmesser. Dieses kann dann nur noch in einer bestimmten Orientierung in die Ausnehmung 2 eingesetzt werden. Wird es um 180 ° versetzt in die Ausnehmung eingesetzt, passt es nicht, weil dies durch die unterschiedlich ausgebildeten Radien 19, 20 verhindert wird.

Im übrigen ist es nicht lösungsnotwendig, dass die Längserstreckung 31 der Ausnehmung 2 genau parallel zur Längsachse des Messerhalters 1 verläuft. Diese Längserstreckung 31 kann auch seitlich versetzt zur Längsachse des Messerhalters 1 ausgebildet sein. Es handelt sich dann um eine exzentrisch im Messerhalter angeordnete Ausnehmung 2.

Vorteil der Erfindung ist, dass die gesamte Ausnehmung 2 durch die ineinander übergehenden Radien 18, 19, 20, 22 gebildet ist, so dass keine scharfen Kanten mehr vorhanden sind. Damit wird die Ausnehmung besser gegen Bruch geschützt und es ist eine verbesserte Längsführung des Schneidmessers 3 bei verminderter Verkantungsgefahr gegeben.

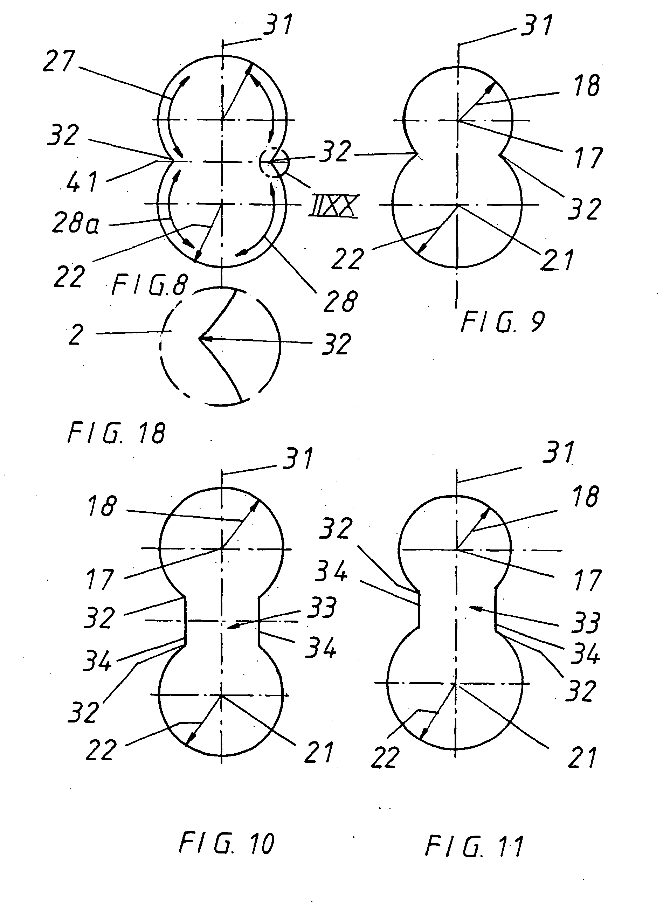

Figuren 8 bis 17 zeigen gegenüber Figur 7 abgewandelte Ausführungen der Querschnittsform der Ausnehmung 2 und damit auch des Grundkörpers 12 des Schneidmessers 3 bzw. des Halters des Schneidmessers 3 (nicht dargestellt). In den Zeichnungen ist mit dem Bezugszeichen 42 der Hauptlastbereich gekennzeichnet.

Figur 8 ist gegenüber Figur 7 derart verändert, dass keine verrundende Übergänge bzw. kleine Radien 19, 20 zwischen den großen Radien 18, 22 vorgesehen sind. Die Übergänge zwischen den sich schneidenden Radien 18, 22 sind durch mehr oder weniger scharfe Kanten 32 gebildet. Dies ist eine kostengünstigere Ausführung, die gegenüber der Figur 7 geringere Stabilität aufweist, da an den linienförmigen scharfen Kanten 32 geringe Kerbwirkung während der Nutzung des Messers 3 herrscht. Diese Kerbwirkung ist jedoch bei geringen bis mittleren Anforderungen (Schnittkräften) zu vernachlässigen, da die lastübertragenden Flächen sich bei 27 und 28 im Bereich der großen Radien 18, 22 befinden. Die Ausnehmung 2 ist in Figur 8 sowohl spiegelsymmetrisch zur Längserstreckung 31 (Hochachse), als auch spiegelsymmetrisch zur Querachse 41.

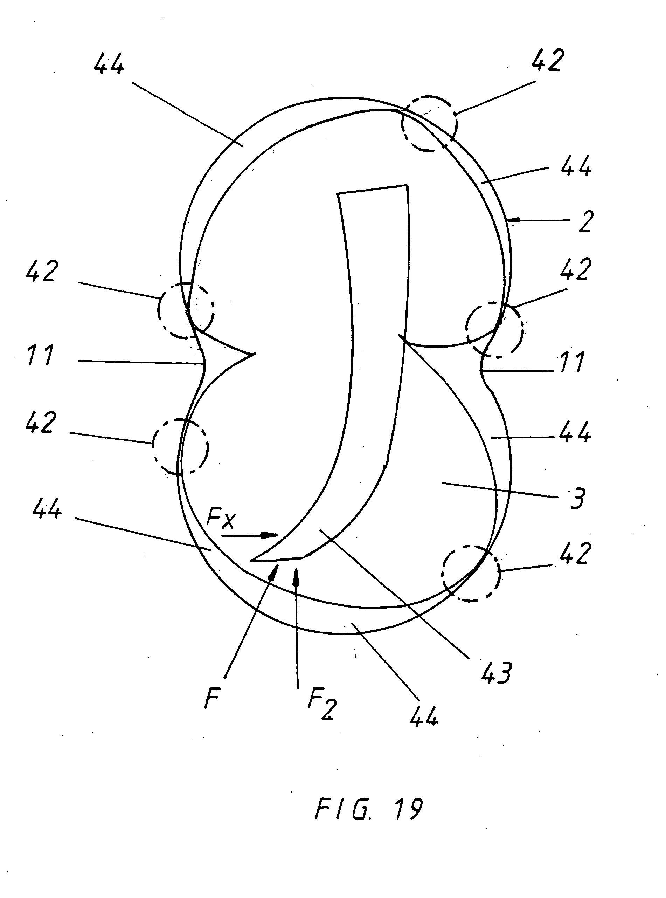

In Figur 18 ist eine vergrößerte Darstellung der linienförmigen scharfen Kanten 32 zu sehen.

Figur 9 wandelt die Ausführung von Figur 8 dahingehend ab, dass unterschiedliche Ausmaße von großen Radien 18 und 22 vorgesehen sind, wobei der obere große Radius 18 kleiner ausgebildet ist. Mit diesem Beispiel soll nur allgemein gezeigt werden, dass der obere und der untere große Radius 18 und 22 nicht zwingend gleich groß sein muss. Wichtig ist aber, dass die während des Schneidvorgangs belasteten Flächen 27, 28 oder 27a, 28a in der Summe einen genügenden Widerstand gegen die auftretende Beanspruchung bilden. Je nach Form des Messerhalters 1 können dann die Radien 18, 22 der Ausnehmung 2 und damit des Messers 3 bzw. des weiteren Messerhalters 4 für das Messer 3 unterschiedliche Werte annehmen. Die Ausnehmung 2 ist in Figur 9 nur spiegelsymmetrisch zur Längserstreckung 31 (Hochachse), nicht aber spiegelsymmetrisch zur Querachse 41.

Figur 10 sieht ein gerades Zwischenstück 33 zwischen den beiden Radien 18, 22 mit parallelen Geraden 34 vor. Der Abstand zwischen den Mittelpunkten 17 und 21 ist größer gezeichnet als die der Mittelpunkte 17 und 21 von Figur 8 und 9. Hierbei können sich die beiden Radien 18, 22 virtuell nicht schneiden wie in Figur 10 oder aber virtuell schneiden (nicht dargestellt) und dennoch ein derartiges gerades Zwischenstück 33 haben. Das gerade Zwischenstück 33 ist im Querschnitt quadratisch, rechteckig, trapezförmig oder rautenförmig, wobei diese auch spiegelsymmetrisch doppelt an jedem Radius 18, 22 vorhanden sein können. Hierdurch können auch größere längliche Messer 3 in einem Messerhalter 1 mit relativ kleinem Außendurchmesser aufgenommen werden, da ansonsten die Bohrungen für die Radien 18, 22 größer als der Außendurchmesser würden oder die restliche verbliebene Wandstärke zu gering und damit zu schwach wäre. Die Ausnehmung 2 ist in Figur 10 wieder sowohl spiegelsymmetrisch zur Längserstreckung 31 (Hochachse), als auch spiegelsymmetrisch zur Querachse 41.

Figur 11 ist eine Abwandlung der Ausführung nach Figur 10 mit unterschiedlichen Größen der großen Radien 18, 22. Auch hier sind wieder die belasteten Anlageflächen 27, 28 oder 27a, 28a in der Summe so ausgelegt, dass der Belastung Stand gehalten werden kann. Die Ausnehmung 2 ist in Figur 11 wieder nur spiegelsymmetrisch zur Längserstreckung 31 (Hochachse), nicht aber spiegelsymmetrisch zur Querachse 41.

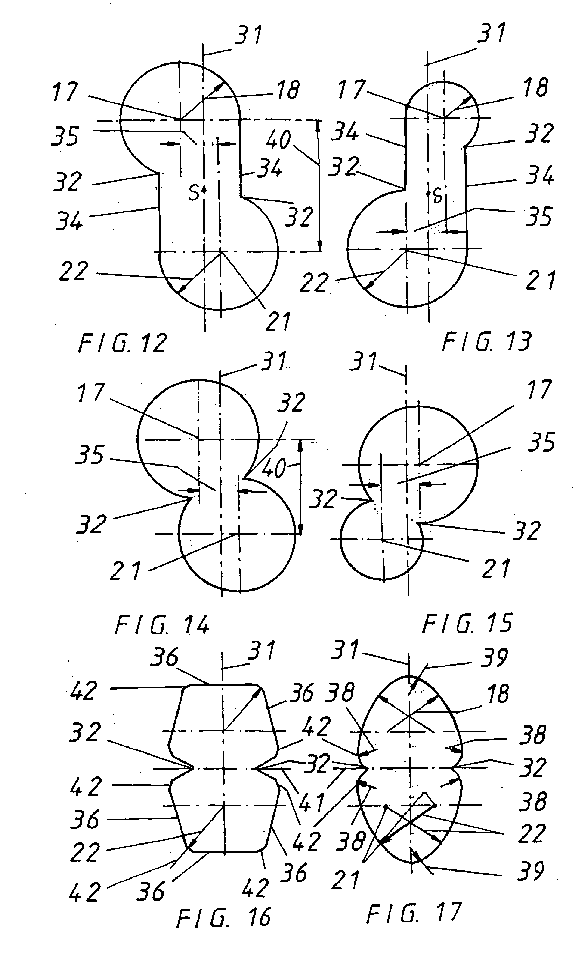

Figur 12 zeigt, dass die großen Radien 18, 22 zusätzlich zum vertikalen Versatz (40) auch seitlich horizontal zueinander versetzt sein können, was insbesondere bei asymmetrischen Messern 3 vorteilhaft ist oder wenn in nur einer Drehrichtung Material abgetragen wird. Durch den horizontalen Versatz 35 der Mittelpunkte 17, 21 entstehen dann auch im Vergleich zu Figur 10 andere Längen von Geraden 34, so dass das Zwischenstück 33 anders geformt ist. In Figur 12 ist eine der Geraden 34 tangential zum oberen Radius18, die andere Gerade 34 ist zum unteren Radius 22 tangential. Die Ausnehmung 2 ist in Figur 12 punktsymmetrisch zum Schwerpunkt S.

Figur 13 stellt eine Variante zur Figur 12 dar, mit kleinerem oberen großen Radius 18 und spiegelverkehrtem Versatz, wobei die Tangente (linke Gerade 34)des oberen großen Radius 18 durch den Mittelpunkt 21 des unteren großen Radius 22 läuft.

Die Figur 14 variiert die Ausführung nach Figur 8 und die Figur 15 variiert die Ausführung nach Figur 9 dahingehend, dass die Mittelpunkte 17, 21 zueinander einen Versatz 35 aufweisen. Die Ausnehmung 2 ist in Figur 14 punktsymmetrisch zum Schwerpunkt S.

Figur 16 und 17 zeigen eine gegenüber der Ausführung nach Figur 8 durch Flächen und/oder Radien beschnittene Ausnehmung 2. Dem großen Radius 18, 22 wurde jeweils ein Pentagon überlagert, wobei nur noch die Ecken als Abschnitte des großen Radius 18, 22 ausgeführt sind, verbunden über jeweils drei lange Geraden 36 und zwei kurze Geraden 37. Im Bereich der kurzen Geraden 37 sind die zwei Pentagon-Kreis-Körper spiegelsymmetrisch miteinander verschmolzen, wobei jeweils die Spitze am Kopf des Pentagons nicht mehr vorhanden ist. Die Verbindung der beiden Pentagon-Kreis-Körper wird durch scharfe Kanten 32 wiederum erreicht, die aber wiederum kaum oder nicht lastübertragend sind und daher nicht gerundet werden müssen. Die vier seitlichen der sechs langen Geraden 36 bilden ideale ebene Flanken zur Übertragung der lasten, die bei der Materialbearbeitung auftreten.

Figur 17 zeigt eine Weiterbildung der Ausführung der Ausnehmung nach Figur 8, wobei im mittleren Teil links und rechts der Hochachse ein Streifen gedanklich heraus genommen wurde. Der so entstehende Körper wurde anschließend an den Übergangsstellen mittels der kleinen Radien 38 und 39 verrundet. Die Mittelpunkte 17 und 21 der ursprünglichen großen Radien in Figur 8 haben sich in Figur 17 jeweils verdoppelt, wobei diese Doppel einen horizontalen Abstand, nicht aber einen vertikalen besitzen, gemäß Figur 17. Dies Ausführung hat im Vergleich zur Ausnehmung 2 von Figur 8 eine geringere effektive lastübertragende Oberfläche, kann jedoch auch bei schmalen und langen Messern 3 und kleineren Bohrungen eingesetzt werden.

Die Ausnehmung 2 ist in Figur 16 und 17 sowohl spiegelsymmetrisch zur Längserstreckung 31 (Hochachse), als auch spiegelsymmetrisch zur Querachse 41.

An allen Übergängen zwischen den Grundkörpern der Ausnehmungen 2 der Figuren 8-17 können Radien und/oder Fasen angebracht werden, so z.B. kleinere Radien 19 und 20 anstatt der scharfen Kanten 32.

Auch können sämtliche Geometrien der Ausnehmungen 2 der Figuren 7-17 durch ein, zwei oder mehrere Flächen und/oder Radien beschnitten werden, wie in den Figuren 16 und 17 dargestellt.

Es soll noch einmal ausdrücklich darauf hingewiesen werden, dass alle Geometrien der Querschnitte bzw. inneren Oberflächen der Ausnehmungen 2 der Figuren 7-17 natürlich auch für die Geometrien der Querschnitte bzw. äußeren Oberflächen der Grundkörper 12 der Messer 3 bzw. der Messerhalter 4 gelten. Die Formen der Ausnehmungen 2 korrespondieren in etwa mit den Formen der Grundkörper 12 der Messer 3 bzw. der Messerhalter 4, die in den Ausnehmungen 2 starr oder beweglich zu ihrer eigenen Längsachse aufgenommen werden.

Die Figur 19 zeigt als weiteres Ausführungsbeispiel, dass ein in bestimmter Weise profiliertes Schnedmesser 3 in eine anders profilierte Ausnehmung 2 eingreift und dort verschiebbar geführt ist. Es ergeben sich deshalb nur einige lastübertragende Berührungszonen zwischen dem Schneidmesser und den zugeordneten Anlageflächen in der Ausnehmung 2. Die Berührungszonen sind wieder als Hauptlastbereich 42 bezeichnet. Die Schneidkraft F von der Schneidkante 43 des Messers wird in die beiden senkrecht zueinander stehenden Komponenten Fx und Fz zerlegt und über die stückweise vorhandenen Hauptlastbereiche 42 auf die Ausnehmung 2 übertragen. Zwischen diesen Bereichen 42 ergeben sich Freiräume 44, die nicht lastübertragend wirken und in denen sich Späne festsetzen können, ohne dass es zu einer Beeinträchtigung der Verschiebeführung des Schneidmessers in der Ausnehmung kommt. Diese Späne können daher leicht entfernt werden.

### Zeichnungslegende

- 1: Messerhalter
- 2: Ausnehmung
- 2': Ausnehmung
- 3: Schneidmesser
- 4: Halter für Schneidmesser
- 5: Antriebsstab
- 6: Nocke
- 7: Nut
- 8: Pfeilrichtung
- 9: Pfeilrichtung
- 10: Längsbohrung
- 11: Sicherungskante (Gehäuse)
- 11a: Sicherungskante (Gehäuse)
- 12: Körper
- 13: Schneidkante
- 14: Spannut
- 15: Sicherungskante
- 16: Freifläche
- 17: Mittelpunkt
- 18: Radius
- 19: Radius
- 20: Radius
- 21: Mittelpunkt
- 22: Radius
- 23: Position
- 24: Position
- 25: Position
- 26: Position
- 27: Lastübertragung
- 27a: Lastübertragung
- 28: Lastübertragung
- 28a: Lastübertragung
- 29: Position
- 30: Position
- 31: Längserstreckung
- 32: unverrundeter Übergang
- 33: Zwischenstück
- 34: Gerade
- 35: Horizontaler Versatz
- 36: Lange Gerade Pentagon
- 37: Kurze Gerade Pentagon
- 38: Kleiner Radius
- 39: Kleiner Radius
- 40: Vertikaler Versatz
- 41: Querachse
- S: Schwerpunkt
- 42: Hauptlastbereich
- 43: Schneidkante
- 44: Freiraum

## Patentansprüche

1. Werkzeug zum Senken, Entgraten und/oder Ausspindeln von Bohrungen mit einem Messerhalter (1), in dem im Winkel zu seiner Längsachse mindestens eine Ausnehmung (2, 2') angeordnet ist, in der ein oder mehrere Schneidmesser (3) oder deren Halter (4) auswechselbar und/oder verschiebbar lastübertragend gehalten sind, **dadurch gekennzeichnet, dass** die Ausnehmung (2, 2') aus im wesentlichen ineinander übergehende Geraden und/oder Strecken und/oder Radien (18, 19, 20, 22) gebildet ist, wobei die Ausnehmung (2, 2') und der darin befindliche Grundkörper (12) des mindestens einen Schneidmessers (3) oder dessen Halter (4) eine etwa "8"- oder brillenförmige oder knochenförmige oder nierenförmige oder doppelblattförmige oder doppel-trochoidförmige oder doppelpentagonalförmige Formgebung aufweisen.

2. Werkzeug zum Senken nach Anspruch 1, **dadurch gekennzeichnet, dass** sowohl die Ausnehmung (2, 2'), als auch der in der Ausnehmung (2, 2') befindliche Grundkörper (12) des mindestens einen Schneidmessers (3) oder dessen Halter (4) im geometrischen Hauptlastbereich (27, 27a, 28, 28a) aus im wesentlichen ineinander übergehende Radien (18, 19, 20, 22) gebildet ist, oder aus im Bezug auf die Lasteinleitungsrichtung oder zur Längserstreckung (31) der Ausnehmung (2, 2') bzw. des Messers (3) oder dessen Halter (4), im Winkel liegenden, schrägen Geraden (36) gebildet ist.

3. Werkzeug nach Anspruch 1 oder 2, **dadurch gekennzeichnet, dass** die Ausnehmung (2, 2') und der darin befindliche Grundkörper (12) des mindestens einen Schneidmessers (3) oder dessen Halter (4) spiegelsymmetrisch um seine Längserstreckung (31) und/oder um seine Querachse (41) ausgebildet ist oder punktsymmetrisch um seinen Schwerpunkt (S) ausgebildet ist.

4. Werkzeug nach einem der Ansprüche 1 bis 3, **dadurch gekennzeichnet, dass** zwei etwa symmetrisch zueinander angeordnete und gegeneinander gestellte größere Radien (18, 22) der Ausnehmung (2, 2') ineinander übergehen und der Übergangsbereich durch kleinere, entgegengesetzt gerichtete Radien (19,20) und/oder scharfe Kanten (32) und/oder Geraden (34) gebildet ist.

5. Werkzeug nach Anspruch 4, **dadurch gekennzeichnet, dass** die zwei größeren Radien (18, 22) sich fiktiv nicht schneiden und der Übergangsbereich durch ein Übergangsstück (33) mit Geraden (34) gebildet ist.

6. Werkzeug nach Anspruch 1 oder 4, **dadurch gekennzeichnet, dass** die zwei größeren Radien (18, 22) unterschiedliche Beträge von Radien haben.

7. Werkzeug nach einem der Ansprüche 4 bis 6, **dadurch gekennzeichnet, dass** die Mittelpunkte (17, 21) der zwei größeren Radien (18, 22) um einen horizontalen (40, 35) und vertikalen Versatz (35, 40) zueinander versetzt sind.

8. Werkzeug nach einem der Ansprüche 1 bis 7, **dadurch gekennzeichnet, dass** zwei etwa symmetrisch zueinander angeordnete und gegeneinander gestellte Polygone der Ausnehmung (2, 2') mit Umkreis (18, 22) ineinander übergehen und der Übergangsbereich durch kleinere, entgegengesetzt gerichtete Radien (19,20) und/oder scharfe Kanten (32) und/oder Geraden (37) gebildet ist.

9. Werkzeug nach einem der Ansprüche 1 bis 8, **dadurch gekennzeichnet, dass** das Schneidmesser (3) in der Ausnehmung (2, 2') längsverschiebbar geführt ist.

10. Werkzeug nach einem der Ansprüche 1 bis 9, **dadurch gekennzeichnet, dass** das Schneidmesser (3) in der Ausnehmung (2, 2') einstellbar befestigt ist.

11. Werkzeug nach einem der Ansprüche 1 bis 10, **dadurch gekennzeichnet, dass** die Längserstreckung (31) der Ausnehmung (2) parallel zur Längsachse des Messerhalters (1) ist.

12. Werkzeug nach einem der Ansprüche 1 bis 10, **dadurch gekennzeichnet, dass** die Längserstreckung (31) der Ausnehmung (2) quer zur Längsachse des Messerhalters (1) ist.

13. Werkzeug nach einem der Ansprüche 1 bis 7 und 9 bis 12, **dadurch gekennzeichnet, dass** die Mittelpunkte (17, 21) der Radien (18, 22) zueinander fluchtend auf der Längserstreckung (31) der Ausnehmung (2) liegen.

14. Werkzeug nach einem der Ansprüche 1 bis 7 und 9 bis 12, **dadurch gekennzeichnet, dass** die Mittelpunkte (17, 21) der Radien (18, 22) zueinander versetzt zu der Längserstreckung (31) der Ausnehmung (2) angeordnet sind.

15. Werkzeug nach einem der Ansprüche 1 bis 7 und 9 bis 14, **dadurch gekennzeichnet, dass** die größeren Radien (18 und 22) stetig mit Krümmungen in die kleineren Radien (19, 20) übergehen.

16. Werkzeug nach einem der Ansprüche 1 bis 15, **dadurch gekennzeichnet, dass** die größeren Radien (18 und 22) unter Zwischenschaltung von Geradenabschnitten in die kleineren Radien (19, 20) übergehen.

17. Werkzeug zum Senken nach den Ansprüchen 1 bis 16, **dadurch gekennzeichnet, dass** die Ausnehmung (2, 2') aus im wesentlichen ineinander übergehenden Radien (18, 19, 20, 22) gebildet ist.

## Claims

1. Tool for countersinking, deburring and/or cutting out bores, with a blade holder (1) in which at least one recess (2, 2') is disposed at an angle with respect to its longitudinal axis, in which one or several cutting blades (3) or their holders (4) can be interchangeably and/or displaceably retained in a load transmitting arrangement, **characterised in that** the recess (2, 2') is formed by essentially straight portions and/or runs and/or radii (18, 19, 20, 22) merging into one another, and the recess (2, 2') and the base body (12) of the at least one cutting blade (3) or its holder (4) disposed in it has a shape approximately akin to a figure "8" or a pair of spectacles or a bone or kidney or double leaf or double trochoid or double pentagon.

2. Countersinking tool as claimed in claim 1, **characterised in that** both the recess (2, 2') and the base body (12) of the at least one cutting blade (3) or its holder (4) disposed in the recess (2, 2') is formed of essentially mutually merging radii (18, 19, 20, 22) in the geometric main load region (27, 27a, 28, 28a) or of oblique straight portions (36) lying at an angle with respect to the direction in which load is transmitted or with respect to the longitudinal extension (31) of the recess (2, 2') or the blade (3) or its holder (4).

3. Tool as claimed in claim 1 or 2, **characterised in that** the recess (2, 2') and the base body (12) of the at least one cutting blade (3) or its holder (4) disposed in it is symmetrical in mirror image about its longitudinal extension (31) and/or about its transverse axis (41) or is locally symmetrical about its centre of gravity (S).

4. Tool as claimed in one of claims 1 to 3, **characterised in that** two bigger radii (18, 22) of the recess (2, 2') disposed more or less symmetrically with one another and positioned back to back merge with one another and the transition region is formed by smaller, oppositely directed radii (19, 20) and/or sharp edges (32) and/or straight portions (34).

5. Tool as claimed in claim 4, **characterised in that** the two bigger radii (18, 22) do not have an imaginary intersection and the transition region is formed by a transition piece (33) with straight portions (34).

6. Tool as claimed in claim 1 or 4, **characterised in that** the two bigger radii (18, 22) have differing amounts of radii.

7. Tool as claimed in one of claims 4 to 6, **characterised in that** the centre points (17, 21) of the two bigger radii (18, 22) are mutually offset from one another by a horizontal (40, 35) and vertical offset (35, 40).

8. Tool as claimed in one of claims 1 to 7, **characterised in that** two polygons of the recess (2, 2') disposed approximately symmetrical with one another and positioned back to back merge with one another by means of a circumcentre (18, 22) and the transition region is formed by smaller, oppositely directed radii (19, 20) and/or sharp edges (32) and/or straight portions (37).

9. Tool as claimed in one of claims 1 to 8, **characterised in that** the cutting blade (3) is guided in the recess (2, 2') so that it can be displaced longitudinally.

10. Tool as claimed in one of claims 1 to 9, **characterised in that** the cutting blade (3) is secured in the recess (2, 2') so that it can be adjusted.

11. Tool as claimed in one of claims 1 to 10, **characterised in that** the longitudinal extension (31) of the recess (2) extends parallel with the longitudinal axis of the blade holder (1).

12. Tool as claimed in one of claims 1 to 10, **characterised in that** the longitudinal extension (31) of the recess (2) extends transversely to the longitudinal axis of the blade holder (1).

13. Tool as claimed in one of claims 1 to 7 and 9 to 12, **characterised in that** the centre points (17, 21) of the radii (18, 22) lie in alignment with one another on the longitudinal extension (31) of the recess (2).

14. Tool as claimed in one of claims 1 to 7 and 9 to 12, **characterised in that** the centre points (17, 21) of the radii (18, 22) are disposed mutually offset from one another with respect to the longitudinal extension (31) of the recess (2).

15. Tool as claimed in one of claims 1 to 7 and 9 to 14, **characterised in that** the bigger radii (18 and 22) merge constantly into the smaller radii (19, 20) with curvatures.

16. Tool as claimed in one of claims 1 to 15, **characterised in that** the bigger radii (18 and 22) merge into the smaller radii (19, 20) incorporating straight portions.

17. Countersinking tool as claimed in claims 1 to 16, **characterised in that** the recess (2, 2') is formed by radii (18, 19, 20, 22) essentially merging into one another.

## Revendications

1. Outil pour le chanfreinage, l'ébavurage et/ou l'alésage de trous à l'aide d'un porte-lame (1) dans lequel est disposé, suivant un certain angle par rapport à son axe longitudinal, au moins un creux (2, 2') dans lequel une ou plusieurs lames de coupe (3) ou fixations (4) de celles-ci sont fixées en transmettant la charge et de manière à pouvoir être changées et/ou déplacées, **caractérisé en ce que** le creux (2, 2') est défini à partir de droites et/ou de segments et/ou de rayons (18, 19, 20, 22) qui sont sensiblement dans le prolongement les uns des autres, le creux (2, 2') et le corps de base (12), situé dans celui-ci, de la ou des lames (3) ou fixations de lames (4) ayant une forme de huit ou de lunettes, d'os, de haricot, une forme bilobée, une forme de trochoïde ou de double pentagone.

2. Outil de chanfreinage selon la revendication 1, **caractérisé en ce que** le creux (2, 2') et le corps de base (12), situé dans celui-ci, de la ou des lames de coupe (3) ou fixations de lames (4) sont tous les deux formés, dans la zone géométrique de charge principale (27, 27a, 28, 28a), à partir de rayons (18, 19, 20, 22) qui sont sensiblement dans le prolongement les uns des autres, ou à partir de droites (36) qui sont inclinées suivant un certain angle par rapport au sens d'introduction de charge ou à l'extension longitudinale (31) du creux (2, 2') ou de la lame (3) ou de la fixation (4) de celle-ci.

3. Outil selon la revendication 1 ou 2, **caractérisé en ce que** le creux (2, 2') et le corps de base (12), situé dans celui-ci, de la ou des lames de coupe (3) ou fixations de lames (4) sont disposés en miroir par rapport à l'extension longitudinale (31) et/ou à l'axe transversal (41) ou suivant une symétrie ponctuelle par rapport au centre de gravité (S).

4. Outil selon l'une des revendications 1 à 3, **caractérisé en ce que** deux grands rayons (18, 22), symétriques et opposés, du creux (2, 2') sont dans le prolongement l'un de l'autre, et la zone de transition est définie par des petits rayons (19, 20), opposés, et/ou des arêtes vives (32) et/ou des droites (34).

5. Outil selon la revendication 4, **caractérisé en ce que** les deux grands rayons (18, 22) n'ont pas d'intersection fictive, et la zone de transition est définie par une partie de transition (33) avec des droites (34).

6. Outil selon la revendication 1 ou 4, **caractérisé en ce que** les deux grands rayons (18, 22) ont des valeurs de rayon différentes.

7. Outil selon l'une des revendications 4 à 6, **caractérisé en ce que** les centres (17, 21) des deux grands rayons (18, 22) présentent un décalage horizontal (40, 35) et un décalage vertical (35, 40).

8. Outil selon l'une des revendications 1 à 7, **caractérisé en ce que** deux polygones du creux (2, 2') disposés symétriquement et à l'opposé l'un de l'autre sont dans le prolongement l'un de l'autre avec un cercle circonscrit (18, 22), et la zone de transition est définie par des petits rayons (19, 20), opposés, et/ou des arêtes vives (32) et/ou des droites (37).

9. Outil selon l'une des revendications 1 à 8, **caractérisé en ce que** la lame de coupe (3) est guidée mobile longitudinalement dans le creux (2, 2').

10. Outil selon l'une des revendications 1 à 9, **caractérisé en ce que** la lame de coupe (3) est fixée de manière réglable dans le creux (2, 2').

11. Outil selon l'une des revendications 1 à 10, **caractérisé en ce que** l'extension longitudinale (31) du creux est parallèle à l'axe longitudinal du porte-lame (1).

12. Outil selon l'une des revendications 1 à 10, **caractérisé en ce que** l'extension longitudinale (31) du creux (2) est transversale par rapport à l'axe longitudinal du porte-lame (1).

13. Outil selon l'une des revendications 1 à 7 et 9 à 12, **caractérisé en ce que** les centres (17, 21) des rayons (18, 22) sont dans l'alignement l'un de l'autre, sur l'extension longitudinale (31) du creux (2).

14. Outil selon l'une des revendications 1 à 7 et 9 à 12, **caractérisé en ce que** les centres (17, 21) des rayons (18, 22) sont décalés l'un par rapport à l'autre, par rapport à l'extension longitudinale (31) du creux (2).

15. Outil selon l'une des revendications 1 à 7 et 9 à 14, **caractérisé en ce que** les grands rayons (18 et 22) se prolongent de manière continue avec des courbures par les petits rayons (19, 20).

16. Outil selon l'une des revendications 1 à 15, **caractérisé en ce que** les grands rayons (18 et 22) se prolongent par les petits rayons (19, 20) avec des sections droites entre les deux.

17. Outil de chanfreinage selon les revendications 1 à 16, **caractérisé en ce que** le creux (2, 2') est formé à partir de rayons (18, 19, 20, 22) qui se prolongent sensiblement les uns par les autres.
